# EUROPÄISCHE PATENTSCHRIFT

(11) **EP 2 485 355 B1**
(45) Veröffentlichungstag und Bekanntmachung des Hinweises auf die Patenterteilung: **30.03.2016**
(21) Anmeldenummer: 12152855.8
(22) Anmeldetag: 27.01.2012
(51) Int. Cl.: H02H 7/08, H02P 6/00, H02P 29/02

(54) **Bürstenloser Gleichstrommotor**
Brush-less DC motor
Moteur à courant continu sans brosse

(30) Priorität: 07.02.2011 DE 102011010567
(43) Veröffentlichungstag der Anmeldung: 08.08.2012
(73) Patentinhaber: Magna Electronics Europe GmbH & Co. KG, 63877 Sailauf (DE)
(72) Erfinder: Gössling, Axel, 63755 Alzenau (DE); Kress, Mirko, 63773 Goldbach (DE); Ras, Mauro, 10060 Bibiana (IT); Steigerwald, Volker, 63825 Schöllkrippen (DE)
(74) Vertreter: Rausch, Gabriele

(56) Entgegenhaltungen:
- EP-A1- 0 831 579
- EP-A2- 0 088 277
- DE-C- 512 497
- US-A- 5 285 143

## Beschreibung

Die Erfindung betrifft einen bürstenlosen Gleichstrommotor und insbesondere einen bürstenlosen Gleichstrommotor mit einer Steuerschaltung nach dem Oberbegriff des Hauptanspruchs.

Einen gebräuchlichen bürstenlosen Gleichstrommotor mit einer Steuerschaltung offenbart das Dokument EP 0 088 277 A2. Dort gezeigt ist insbesondere die Erfassung der Stromaufnahme eines Dreiphasenbrückentreibers durch Strommesswiderstände, die auch als Shunts bezeichnet werden. Der erfasste Wert wird zur Steuerung des Motors verwendet.

Eine gebräuchliche Schutzschaltung für einen Brückentreiber in einem Mehrphasensynchronmotor offenbart das Dokument DE 10 2005 014 167 A1. Diese Schutzschaltung bezweckt die Erkennung eines Schadzustands in einem Schaltmittel und insbesondere in einem MOS-FET, um ggf. Maßnahmen gegen Folgeschäden treffen zu können.

Weiterhin offenbart das Dokument DE 10 2005 058 221 B3 eine Überstromsicherung für verschiedene Zwecke. Zwischen zwei Haltern ist ein schmelzbares elektrisch leitendes Material angeordnet, das aufgrund seines elektrischen Widerstands beim Fließen eines elektrischen Stroms erwärmt. Der Querschnitt des Stromflusses ist derart bemessen, dass beim Überschreiten eines festgelegten Werts die Schmelztemperatur überschritten wird. Das geschmolzene Material fließt dann aus dem Leitungspfad heraus, wodurch der Stromfluss unterbrochen wird. Noch weitere, alternative Ausführungsformen von Überstromsicherungen offenbaren die Dokumente DE 10 2009 036 578 B3 und DE 10 2005 040 308 A1.

Aus der DE512497A ist eine Messeinrichtung für eine Schmelzsicherung bekannt, wobei der Spannungsabfall gemessen wird.

Es ist die Aufgabe der vorliegenden Erfindung, einen bürstenlosen Gleichstrommotor mit einer Steuerschaltung zu schaffen, die einen Überstromschutz besonders sinnvoll integriert.

Diese Aufgabe wird durch einen bürstenlosen Gleichstrommotor mit den im Anspruch zu 1 angegebenen Merkmalen gelöst.

Vorteilhafte Ausgestaltungen und Weiterbildungen der vorliegenden Erfindung sind in den Unteransprüchen definiert.

Die Erfindung wird nachfolgend anhand des in den anhängenden schematischen Zeichnungen dargestellten Ausführungsbeispiels näher erläutert. Darin zeigt:

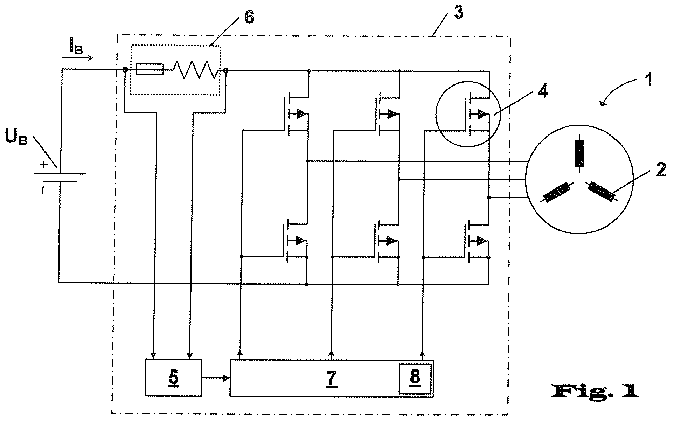

Fig. 1 ein schematisches Schaltbild eines bürstenlosen Gleichstrommotors mit einer Steuerschaltung gemäß der vorliegenden Erfindung.

Gemäß Fig. 1 sind in einem bürstenlosen Gleichstrommotor 1 drei elektrische Wicklungen 2 angelegt. Diese Wicklungen 2 sind Bestandteil eines sog. Stators, der in an sich bekannter Weise ausgeführt und benachbart zu einem permanentmagnetischen Rotor angeordnet ist. Sowohl der Stator als auch der Rotor sind der Übersichtlichkeit halber in der Zeichnung ausgelassen.
Eine Steuerschaltung 3 ist dazu vorgesehen, die Spannung aus einer externen Spannungsquelle U_{B} den Wicklungen 3 zeitabhängig und in wechselnder Polarität aufzuschalten. Dazu umfasst die Steuerschaltung 3 eine Anzahl von Schaltmitteln 4, die in an sich bekannter Weise als MOS-FETs ausgebildet und untereinander als Dreiphasenbrückentreiber verschaltet sind. Der Dreiphasenbrückentreiber wird seinerseits durch eine Steuerungslogik 7 angesteuert. Wegen der Einzelheiten der MOS-FETs und ihrer Ansteuerung durch die Steuerungslogik 7 wird auf die einschlägige Fachliteratur verwiesen.
Daneben umfasst die Steuerschaltung 3 noch eine Überstromsicherung 6, die in der Zuleitung der Versorgungsspannung angeordnet ist und bei Überschreiten eines vorgegebenen Stromwerts die Zufuhr der Versorgungsspannung und damit den Stromfluss durch die Steuerschaltung unterbricht. Die Überstromsicherung 6 kann in an sich bekannter Weise als irreversible Schmelzsicherung, als Bimetall- oder Magnetsicherung oder in anderer bekannter Weise ausgebildet sein. Die Überstromsicherung 6 verhindert die Überhitzung und den Brand der Wicklungen 2 und die Folgezerstörung der Schaltmittel 4 bei einem Kurzschluss in einem Schaltmittel 4 des Dreiphasenbrückentreibers.
Weiterhin umfasst die Steuerschaltung 3 eine Messeinrichtung 5 zum Erzeugen eines elektrischen Signals in Abhängigkeit des Stromflusses I_{B} von der externen Spannungsversorgung U_{B} durch die Steuerschaltung 3. Aus diesem elektrischen Signal und eventuell einem vergleichbaren Signal in Abhängigkeit der anliegenden Versorgungsspannung U_{B} wird in an sich bekannter Weise ein Wert für die momentane Leistungsaufnahme des bürstenlosen Gleichstrommotors 1 abgeleitet, der wiederum die zeitabhängige Ansteuerung der Wicklungen 2 beeinflusst. Diese Maßnahme hat insbesondere dann eine erhebliche Bedeutung, wenn die Rotorlage des Motors für die Ansteuerung der Wicklungen 2 nicht zur Verfügung steht. Der Messeinrichtung 5 ist durch eine geeignete Beschaltung eine Spannung zuführbar, die längs der Überstromsicherung 6 abfällt. Dementsprechend ist in der schematischen Darstellung die Überstromsicherung 6 durch ihr Ersatzschaltbild aus einem idealen Sicherungsbauteil und einem realen Innenwiderstand verdeutlicht. Da es sich bei dem realen Innenwiderstand der Überstromsicherung 6 um einen nahezu ohmschen Widerstand handelt, ist die daran abfallende Spannung dem zu erfassenden Strom I_{B} bis auf Temperatureffekte ungefähr proportional. Angenähert kann daher die Leistungsaufnahme der Steuerschaltung 3 aus der Spannungsquelle aus dem gemessenen Strom und dem Wert der zugeführten Spannung bestimmt werden.
Gebräuchliche Ausführungsformen von Überstromsicherungen werden allerdings nicht hinsichtlich ihres Widerstandswerts toleriert am Markt zur Verfügung gestellt. Somit sind in der Praxis zusätzliche Maßnahmen erforderlich, um die Einflüsse der Herstellungsstreuung hinsichtlich der Überstromsicherungen 6 auf die Qualität des Motorbetriebs zu beherrschen. Im Prinzip wäre es zwar möglich, in einer Serienfertigung den Widerstandswert der Überstromsicherung 6 einzeln zu messen und durch eine Bearbeitung der Überstromsicherung zu justieren oder durch eine Veränderung an der übrigen Steuerschaltung 2 zu kompensieren. Beispielsweise könnte ein Ausgleichswiderstand vorgesehen werden. Damit ginge aber ein wesentlicher Vorteil der vorgeschlagenen Integration verloren.
Deshalb ist es vorzuziehen, bei der Serienfertigung den Widerstand der jeweils zu verbauenden Überstromsicherung 6 zu bestimmen und in einem Datenspeichermittel 8 in der Steuerungslogik 7 der Steuerschaltung 2 dem bestimmten Widerstandswert entsprechende Daten vorzusehen, die im Betrieb des bürstenlosen Gleichstrommotors 1 elektrisch auslesbar und einer Berechnungseinrichtung 7 zuführbar sind. Diese Berechnungseinrichtung 7 sorgt dann für die gewünschte Korrektur. Eine derartige Berechnungseinrichtung 7 erfordert in den derzeit typischen Realisierungen keine zusätzlichen Bauelemente, weil die Steuerungslogik 7 typisch einen Mikroprozessor und einen nichtflüchtigen Programmspeicher 8 für dessen Ablaufsteuerung umfasst. Zudem wird in den überwiegenden Fällen der nichtflüchtige Programmspeicher 8 einzeln mit dem für den Betrieb erforderlichen Programmcode beschrieben. Insofern bietet es sich an, beim Beschreiben des nichtflüchtigen Programmspeichers 8 die Daten zu dem gemessenen Widerstand der Überstromsicherung 6 gleichfalls als Parameter für das auszuführende Programm zu hinterlegen. Auf diese Art kann innerhalb der Steuerschaltung 3 ein elektrisches Signal in Abhängigkeit des Stromflusses I_{B} erzeugt werden, das nur noch in vorgegebenen Grenzen von dem theoretischen exakten Wert abweicht.

## Patentansprüche

1. Bürstenloser Gleichstrommotor (1), aufweisend eine Anzahl von elektrischen Wicklungen (2) und eine damit verbundenen Steuerschaltung (3) mit Schaltmitteln (4) zum zeitabhängigen Beaufschlagen der Wicklungen (2) mit einer elektrischen Spannung aus einer externen Spannungsversorgung (U_{B}), einer Messeinrichtung (5) zum Erzeugen eines elektrischen Signals in Abhängigkeit des Stromflusses (I_{B}) von der externen Spannungsversorgung (U_{B}) durch die Steuerschaltung (3) und einer Überstromsicherung (6) zum Schutz der Steuerschaltung (3) und der Wicklungen (2), **dadurch gekennzeichnet, dass** an der Messeinrichtung (5) eine an der Überstromsicherung (6) abfallende Spannung als Eingangswert anliegt und wobei die Steuerschaltung (3) ein elektrisch auslesbares Datenspeichermittel (8) und eine Berechnungseinrichtung (7) umfasst, um das elektrische Signal in Abhängigkeit der aus dem Datenspeichermittel (5) auslesbaren Daten, die den bestimmten Widerstandswerten der Überstromsicherung entsprechen, und der elektrischen Spannung an der Überstromsicherung (6) zu berechnen.

## Claims

1. Brushless DC motor (1), having a number of electrical windings (2) and a control circuit (3) connected thereto, comprising switching means (4) for time-dependent application of an electrical voltage from an external voltage supply (U_{B}) to the windings (2), a measuring device (5) for generating an electrical signal depending on the current flow (I_{B}) from the external voltage supply (U_{B}) through the control circuit (3) and an overcurrent fuse (6) for protecting the control circuit (3) and the windings (2), **characterized in that** a voltage drop across the overcurrent fuse (6) is present at the measuring device (5) as input value and wherein the control circuit (3) comprises an electrically readable data storage means (8) and a computation device (7) in order to compute the electrical signal depending on the data which can be read from the data storage means (5), which data correspond to the determined resistance values of the overcurrent fuse, and on the electrical voltage across the overcurrent fuse (6).

## Revendications

1. Moteur (1) à courant continu, sans balais, présentant
plusieurs enroulements électriques (2) auxquels est relié un circuit de commande (3) qui présente des moyens de commutation (4) permettant d'appliquer sur les enroulements (2) une tension électrique variant dans le temps et provenant d'une alimentation externe (U_{B}) en tension,
un dispositif de mesure (5) qui forme un signal électrique qui est fonction du courant (I_{B}) qui s'écoule dans le circuit de commande (3) en provenance de l'alimentation externe (U_{B}) en tension et
une protection (6) contre les sur-courants qui protège le circuit de commande (3) et les enroulements (2),
**caractérisé en ce que**
la tension aux bornes de la protection (6) contre les sur-courants est appliquée comme valeur d'entrée sur le dispositif de mesure (5) et
**en ce que** le circuit de commande (3) comporte un moyen (8) de mémoire de données lisible par voie électrique et un dispositif (7) de calcul qui calcule le signal électrique en fonction des données lisibles sur le moyen (5) de mémoire de données et qui correspondent aux valeurs définies de la résistance de la protection contre les sur-courants et la tension électrique aux bornes de la protection (6) contre les sur-courants.
